# EUROPÄISCHE PATENTSCHRIFT

(11) **EP 1 497 099 B1**
(45) Veröffentlichungstag und Bekanntmachung des Hinweises auf die Patenterteilung: **06.04.2011**
(21) Anmeldenummer: 03717309.3
(22) Anmeldetag: 17.04.2003
(51) Int. Cl.: B29C 51/04, B29C 51/38, B29C 51/46

(54) **THERMOFORMANLAGE ZUR HERSTELLUNG VON FORMKÖRPERN AUS KUNSTSTOFFFOLIE, SOWIE VERFAHREN ZU DEREN HERSTELLUNG**
THERMOFORMING INSTALLATION FOR PRODUCING SHAPED BODIES MADE OF PLASTIC FILM, AND METHOD FOR PRODUCING THE SAME
INSTALLATION DE THERMOFORMAGE POUR LA PRODUCTION DE CORPS FACONNES A PARTIR D'UN FILM DE PLASTIQUE, ET PROCEDE DE PRODUCTION DE TELS CORPS

(30) Priorität: 25.04.2002 DE 10218511; 25.04.2002 DE 10218486; 25.04.2002 DE 20206600 U; 25.04.2002 DE 20206601 U
(43) Veröffentlichungstag der Anmeldung: 19.01.2005
(73) Patentinhaber: KUHNE ANLAGENBAU GmbH, D-53757 Sankt Augustin (DE)
(72) Erfinder: SCHLÖSSER, Helmut, 53343 Wachtberg (DE); ASSELBORN, Peter, 51465 Bergisch Gladbach (DE)
(74) Vertreter: Kuhnen & Wacker
(86) Internationale Anmeldenummer: PCT/EP2003/004029
(87) Internationale Veröffentlichungsnummer: WO 2003/099541

(56) Entgegenhaltungen:
- EP-A- 1 314 536
- DE-A- 3 346 628
- US-A- 6 135 756

## Beschreibung

Die vorliegende Erfindung betrifft eine Thermoformanlage zur Herstellung von Formkörpern aus Kunststoffolie, wie Becher, Behälter, Deckel, Lebensmittelverpackungen oder dgl., mit einer ein zweiteiliges Formwerkzeug aufweisenden Umformstation, nach dem Anspruch 1, sowie ein Verfahren zur Herstellung solcher Formkörper nach dem Anspruch 12.

Thermoformanlagen sind in unterschiedlichen Varianten und Ausführungsformen in der Praxis bekannt geworden. Dabei wird zur Herstellung behälterförmiger Artikel bzw. Formkörper aus thermoplastischem Kunststoff ein zweiteiliges Formwerkzeug verwendet. Eine Formhälfte, das sogenannte obere Werkzeug, ist am oberen Werkzeugtisch befestigt und mit diesem in der Regel einstellbar feststellbar mit dem Rahmen bzw. Gestell der Thermoformanlage verbunden, so daß das obere Werkzeug auf den jeweils herzustellenden Formkörper eingestellt werden kann. Die andere Formhälfte, das sogenannte untere Werkzeug, ist beweglich im Rahmen bzw. Gestell der Thermoformanlage geführt.

Zum Ausformen der Formkörper befinden sich die Formhälften, also das obere und das untere Werkzeug, in einer einander zugewandten geschlossenen Position. Zwischen dem oberen und dem unteren Werkzeug ist eine häufig vorgewärmte und somit gut plastisch verformbare Kunststoffolie angeordnet, welche meistens in Form einer Folienbahn von einer Vorratsrolle taktweise zugeführt wird.

Beim Tiefziehvorgang wird die Kunststoffolie zwischen dem oberen und dem unteren Werkzeug eingeklemmt und damit in dessen Lage fixiert. Dann wird die Kunststoffolie durch die Vorstrecker des oberen Werkzeugs in die Kavitäten des unteren Werkzeugs gedrückt, während der Rand des zu erzeugenden Formkörpers weiterhin zwischen dem oberen und dem unteren Werkzeug klemmend festgehalten ist. Durch Erzeugung eines Unterdrucks in den Kavitäten oder durch Einblasen von Luft legt sich die Folie an die Innenwandungen der Kavitäten im unteren Werkzeug an und nimmt somit die gewünschte Form an.

Nach hinreichender Abkühlung der Kunststoffolie durch den Kontakt mit der ggf. aktiv gekühlten Werkzeugoberfläche erfolgt das Heraustrennen der Formkörper aus der Kunststoffolie. Hierzu wird das untere Werkzeug etwa um den Betrag der Foliendicke aufwärts bewegt. Entsprechende Schneidkanten des zweiteiligen Formwerkzeugs schneiden dabei die einzelnen Formkörper aus der Folienbahn heraus. Das zurückbleibende Foliengitter wird häufig wiederum taktweise einer Aufwickeleinheit zugeführt.

Zur Entnahme der Formkörper aus den Kavitäten wird das untere Werkzeug anschließend vom oberen Werkzeug weg bewegt und dabei derart um dessen Längsachse verschwenkt, daß das untere Werkzeug zu einer Stapeleinrichtung zeigt und damit die Formkörper der Stapeleinrichtung übergeben werden können.

Beispiele für vorstehend diskutierte, aus der Praxis bekannte Thermoformanlagen sind z.B. in der US 6,135,756 oder der DE 33 46 628 A1 beschrieben.

Diese bekannten Thermoformanlagen weisen jedoch den wesentlichen wirtschaftlichen Nachteil auf, daß damit lediglich geringe Taktfrequenzen beispielsweise bis etwa 30 Takten pro Minute realisierbar sind. Höhere Taktfrequenzen sind ohne Beschädigung der bewegten Bauteile nicht möglich. Diese geringen Taktfrequenzen sind jedoch angesichts des heute vorherrschenden hohen Kostendrucks nicht mehr akzeptabel.

Weiterhin von Nachteil sind die bei den bekannten Thermoformanlagen eingesetzten Antriebe als auch die dort verwendeten Führungseinrichtungen für das untere Werkzeug.

Die in der DE 33 46 628 A1 beschriebene Thermoformanlage arbeitet im Detail mit einem zweiteiligen Formwerkzeug, wobei das obere Werkzeug gestellfest und das untere Werkzeug beweglich ausgeführt ist. Das untere Werkzeug wird zum Schließen bzw. zum Öffnen in einer kombinierten Hub- und Schwenkbewegung zum oberen Werkzeug hin und von diesem weg und zugleich zu einer Stapeleinrichtung hin ausgerichtet und von dieser weg zum oberen Werkzeug zurück orientiert. Die Hub- und Schwenkbewegung des unteren Werkzeugs wird durch ein Kurvenscheiben-Kniehebelgelenksgetriebe erzeugt. Das untere Werkzeug soll damit vertikal verschoben und gleichzeitig um seine eigene Längsachse verschwenkt werden.

Die bei der aus der DE 33 46 628 A1 bekannten Thermoformanlage zum Einsatz kommende Kombination aus Kniehebelgelenksmechanik in Verbindung mit einem Kurvenscheibenantrieb ist sehr komplex gestaltet. Dabei weist bereits der Kurvenscheibenantrieb als solcher den systematischen Nachteil auf, daß damit nur begrenzte Kräfte übertragbar sind. Zudem sind mit einem Kurvenscheibenantrieb keine hohen Taktfrequenzen realisierbar. Daneben neigen Kurvenscheibenantriebe schnell zum Verschleiß, so daß diese häufig gewartet werden müssen, was die Betriebskosten einer solchen Thermoformanlage inakzeptabel in die Höhe treibt. Zudem weist die hier diskutierte Thermoformanlage gemäß der DE 33 46 628 A1 mit deren komplexer Kniehebelgelenksmechanik eine weitere Bauteilgruppe auf, die ebenfalls systembedingt nur geringe Taktfrequenzen zuläßt.

Ein weiterer Nachteil dieser bekannten Thermoformanlage liegt darin, daß der Vorgang des Heraustrennens der ausgeformten Formkörper aus der Kunststoffolie relativ viel Zeit in Anspruch nimmt und dabei eher schneidend oder gar quetschend erfolgt, so daß die diesbezüglichen Schneidkanten des zweiteiligen Formwerkzeugs rasch abnutzen. Dies erhöht wiederum den Wartungsaufwand, was sich damit wieder negativ auf die Betriebskosten durchschlägt. Eine Erhöhung der Austrenngeschwindigkeit derart, daß beispielsweise Stanzgeschwindigkeiten erreicht werden könnten, ist bei der in der DE 33 46 628 A1 diskutierten Thermoformanlage systembedingt nicht möglich. Begrenzende Elemente sind hierbei die Kurvenscheiben, die neben der komplexen Gesamtbewegung des unteren Werkzeugs auch dessen zusätzliche Hubbewegung zum Heraustrennen der ausgeformten Formkörper erzeugen müssen. Wollte man die Trenngeschwindigkeit erhöhen, müßte man diejenigen Kurvenabschnitte der Kurvenscheibe, welche die Heraustrennbewegung steuern, wesentlich kürzer gestalten bzw. das ihnen zugeordnete Winkelsegment der Kurvenscheibe kleiner ausbilden, was jedoch zu äußerst ungünstigen Kraftantriebsverhältnissen und damit zu einer nicht tolerierbaren Erhöhung der Bauteilbelastung führt. Solcher Art belastete Kurvenscheiben müßten infolgedessen ständig gewartet oder gar ausgetauscht werden, was die Betriebskosten erneut inakzeptabel in die Höhe treibt. Damit setzen die Kurvenscheiben der DE 33 46 628 A1 nicht nur den erzielbaren Taktfrequenzen eine obere Grenze, sondern auch der Austrenngeschwindigkeit.

Aus der nach dem Anmeldetag der vorliegenden Erfindung veröffentlichten Druckschrift EP 1 314 536 A1 ist ferner eine Vorrichtung zum Formen und Ausstanzen von Behältern aus einer Folienbahn aus thermoplastischem Kunstsstoff bekannt. Die Vorrichtung weist hierbei einen oberhalb einer führbaren Folienbahn angeordneten Obertisch sowie einen unterhalb der Folienbahn angeordneten, höhenverstellbaren und schwenkbaren Untertisch auf, wobei der Untertisch zu einer um einen Drehpunkt schwenkbaren Schwenkbrücke verschiebbar ausgeführt ist. Die Hub- und Schwenkbewegung des Untertisches wird hierbei, analog zur DE 33 46 628 A1, durch ein Kurvenscheiben-Kniehebelgelenksgetriebe erzeugt.

Die Druckschrift DE3346628 A1 beschreibt auch ein Verfahren zur Herstellung von Formkörpern mit den folgenden, durch die Druckschrift DE3346628 A1 bereits bekannten, Verfahrensschritten:
- Bereitstellen einer Thermoformanlage gemäß dem Oberbegriff des Anspruchs 1,
- Zuführen von Kunststofffolie in das Formwerkzeug,
- Spannen der Kunststofffolie
- Schließen des Formwerkzeugs durch Führung des beweglichen unteren Werkzeugtisches vermittels der Führungseinrichtung sowie Antreiben desselben vermittels der Antriebseinrichtung derart, dass dieser relativ zum oberen Werkzeugtisch auf diesen zu bewegt wird, wobei der
- untere Werkzeugtisch vermittels einer Antriebseinrichtung angetrieben wird,
- Herstellen der Formkörper bei geschlossenem Formwerkzeug (10,11), wobei
- Öffnen des Formwerkzeugs durch Führung des beweglichen unteren Werkzeugtisches vermittels der Führungseinrichtung sowie Antreiben desselben vermittels der Antriebseinrichtung derart, dass dieser relativ zum oberen Werkzeugtisch von diesem weg bewegt wird, und
- Auswerfen der Formkörper ggf. in eine Stapeleinrichtung.

Die Thermoformanlage gemäß der US 6,135,756 weist im Detail ebenfalls ein zweiteiliges Formwerkzeug auf. Die Führungseinrichtung ist auch hier mit der Antriebseinrichtung des unteren Werkzeugtisches bzw. des unteren Werkzeugs kombiniert und erzeugt vermittels eines Kurvenscheiben-Kurbelgetriebes eine kombinierte Hub- und Schwenkbewegung des Unterwerkzeugs. Die Thermoformanlage gemäß der US 6,135,756 weist zwei jeweils an den äußeren Stirnseiten des unteren Werkzeuges angeordnete Kurvenscheiben-Kurbelgetriebe auf. Dabei weist das untere Werkzeug an seinen äußeren Seiten je drei Zapfen auf, die in den gestellfesten zugeordneten Nutkurven bzw. Kulissenführungen laufen. Die Nutkurven weisen eine extrem komplexe Geometrie auf und sind so ausgelegt, daß das untere Werkzeug beim Öffnen des Formwerkzeugs vom oberen Werkzeug abwärts weg bewegt und verschwenkt werden kann, um es auf eine Stapeleinrichtung hin zu orientieren und von dieser wieder weg schwenken zu können. Da die komplexe Geometrie der Nutkurven bzw. Kulissenführungen nicht geeignet ist, um die für das Heraustrennen der geformten Formkörper aus der Kunststoffolie notwendigen Kräfte zu übertragen, sind zusätzliche Kurvenscheiben vorgesehen, mit denen die hierzu notwendigen Kräfte übertragen werden sollen.

Zwar sind damit im Vergleich zur DE 33 46 628 A1 geringfügig höhere Austrenngeschwindigkeiten zu erreichen. Die für ein Ausstanzen der Formkörper aus der Kunststoffolie notwendigen hohen Austrenngeschwindigkeiten sind damit jedoch nicht erzielbar. Der Austrennvorgang bleibt ein Schneiden bzw. Abquetschen.

Demgegenüber sind die Kurvenscheiben der US 6,135,756 im Vergleich zur DE 33 46 628 A1 wesentlich höher belastet. Dies führt dementsprechend zu einem vorzeitigen Verschleiß dieser Bauteile. Somit werden erhebliche Wartungsarbeiten erforderlich, was sich auf die Betriebskosten negativ niederschlägt. Aufgrund der ungünstigen Kraftübertragungsverhältnisse ist ferner nicht auszuschließen, daß die Kurvenscheiben vorzeitig bersten und dann ausgetauscht werden müssen. Dies führt dann zum Stillstand der Thermoformanlage, so daß die Produktion gänzlich zum Erliegen kommt.

Abgesehen davon sind mit den geometrisch komplexen und nur sehr schwer aufeinander abstimmbaren Kulissenführungen die heute geforderten hohen Taktfrequenzen ausgeschlossen. Ferner können mit derartigen Kulissenführungen keine ausreichend großen Kräfte übertragen werden, da über die Führungsbolzen nicht nur die Kräfte zum Heben und Senken des unteren Werkzeugs, sondern auch die Kräfte zu dessen Beschleunigung, Verzögerung sowie zum Kippen oder zum Verschwenken übertragen werden müssen. Große Werkzeuge mit einer für heutige Anforderungen ausreichenden Anzahl von Kavitäten sind mit der Lehre der US 6,135,756 nicht realisierbar, da mit zunehmender Größe das Eigengewicht des unteren Werkzeugs zunimmt, so daß die dann notwendigen Kräfte für die vorgenannten Bewegungen nicht mehr übertragen werden können.

Ferner, erfordert die komplexe Geometrie der Mehrzahl von Kulissenführungen eine ständige Wartung derselben, da diese aufgrund der hohen Kräfte leicht beschädigt werden, ausschlagen oder die geforderte Spurtreue verlieren.

Darüber hinaus haben diese komplexen Kulissenführungen den weiteren großen Nachteil, daß damit ein sauberes Anbieten des unteren Werkzeuges bei der schließenden Bewegung zum oberen Werkzeug hin nicht sicherzustellen ist. Ein sauberes Anbieten des unteren Werkzeuges gegenüber dem oberen Werkzeug ist jedoch gerade bei hohen Taktfrequenzen eine wesentliche Voraussetzung für ein wiederholgenaues Herstellen formtreuer Formkörper, um unerwünschten Ausschuß vermeiden zu können.

Demgegenüber ist es Aufgabe der vorliegenden Erfindung, bekannte Thermoformanlagen derart zu verbessern, daß wesentlich höhere Taktfrequenzen erreicht werden können und damit ein wirtschaftlicher Betrieb solchermaßen verbesserter Thermoformanlagen möglich wird. Ferner ist es Aufgabe der vorliegenden Erfindung, ein wirtschaftliches Verfahren zur Herstellung von Formkörpern aus Kunststoffolie vorzuschlagen.

Diese Aufgabe wird in vorrichtungstechnischer Hinsicht durch die Merkmale des Anspruchs 1 gelöst.

In verfahrenstechnischer Hinsicht wird die Aufgabe gelöst durch die Merkmale des Anspruchs 12.

Erfindungsgemäß wird eine Thermoformanlage zur Herstellung von Formkörpern aus Kunststoffolie, wie Becher, Behälter, Deckel, Lebensmittelverpackungen oder dgl., mit einer ein zweiteiliges Formwerkzeug aufweisenden Umformstation, vorgeschlagen. Dabei weist das zweiteilige Formwerkzeug einen einstellbar feststellbar oberen Werkzeugtisch mit einem oberen Werkzeug mit darin beweglich gelagerten Vorstreckem und einen beweglichen unteren Werkzeugtisch mit einem unteren Werkzeug mit Kavitäten auf. Der bewegliche untere Werkzeugtisch ist dabei vermittels einer Führungseinrichtung geführt und durch eine erste Antriebseinrichtung relativ zum oberen Werkzeugtisch auf diesen zu und von diesem weg bewegbar.

Hierbei ist erstmalig vorgesehen, daß die Führungseinrichtung eine verschwenkbare Führungs-Schienenanordnung aufweist, vermittels derer der untere Werkzeugtisch linear bzw. geradlinig führbar und zusammen mit dieser verschwenkbar ist. Damit kann der untere Werkzeugtisch in vorteilhafter Weise eine klar definierte geradlinige Hubbewegung ausführen, ohne daß er in der aus dem Stand der Technik bekannten nachteiligen Weise zugleich eine Schwenkbewegung um seine eigene Längsachse ausführen muß.

Die Schwenkbewegung des unteren Werkzeugs zum Auswerfen der fertigen Formkörper wird erfindungsgemäß in vorteilhafter Weise durch die Verschwenkbarkeit der Führungs-Schienenanordnung erzielt, ohne daß dabei der untere Werkzeugtisch relativ zu sich selbst beispielsweise um seine Längsachse verschwenkt werden müßte. Damit ist in vorteilhafter Weise sichergestellt, daß das untere Werkzeug dem oberen Werkzeug bei jeder Hubbewegung zum oberen Werkzeug hin diesem sauber zugeführt und somit wiederholbar lagegenau angeboten werden kann, so daß das untere Werkzeug immer gleich auf das obere Werkzeug auftrifft.

Die Verschwenkbarkeit der Führungs-Schienenanordnung bietet mit der Entkoppelung der Schwenkbewegung von der linearen Hubbewegung weiterhin den Vorteil, daß die Wiederholgenauigkeit der axialen bzw. geradlinigen Hubbewegung des unteren Werkzeuges von der Schwenkbewegung weder verfälschend überlagert noch von dieser in irgendeiner Form negativ beeinträchtigt wird. Zudem kann das untere Werkzeug auf diese Weise im abgesenktem Zustand bzw. im vom oberen Werkzeug entfernten Zustand vermittels der verschwenkbaren Fürungs-Schienenanordnung aus dem Rahmen der Thermoformanlage heraus geschwenkt und auf eine Stapeleinrichtung lagegenau ausgerichtet werden. Damit kann in vorteilhafter Weise das untere Werkzeug mit den darin befindlichen fertiggestellten Formkörper in dieser Lage optimal zur Stapeleinrichtung ausgerichtet, dieser angeboten und ggf. auf diese hin und/oder von dieser wieder weg wiederum in einer vorteilhaften linearen Bewegung bewegt werden.

Darüber hinaus bietet die neue Führungseinrichtung mit einer verschwenkbaren Führungs-Schienenanordnung den zusätzlichen Vorteil, daß das untere Werkzeug mit bekannten, entsprechend ausgereiften Koppelgliedern zwischen den Führungsschienen der verschwenkbaren Schienenanordnung axial beweglich gelagert bzw. geradlinig geführt werden kann, so daß hierbei nur noch Führungskräfte von den Koppelgliedern aufzunehmen sind und die eigentlichen bewegungserzeugenden Kräfte für die Hubbewegung auf das obere Werkzeug hin und von diesem weg als auch für eine Stanzbewegung über einen direkt am unteren Werkzeugtisch angreifenden Antrieb auf den unteren Werkzeugtisch übertragen werden können, so daß die Führung des unteren Werkzeugtisches mit diesen großen Kräften in vorteilhafter Weise nicht mehr belastet ist. Auf diese Weise können beliebig große Kräfte direkt auf den unteren Werkzeugtisch übertragen werden, ohne die aus dem Stand der Technik bekannte Gefahr der unvermeidlichen Abnutzung oder gar eines Bruches von aus dem Stand der Technik bekannten Kombinationen aus Kurvenscheiben und in Kulissenführungen laufenden mit der gesamten Antriebskraft beaufschlagten Führungsbolzen.

Bei der erfindungsgemäßen Thermoformanlage weist die verschwenkbare Führungs-Schienenanordnung der Führungseinrichtung erstmals zwei an einem Rahmen der Thermoformanlage angelenkte schwenkbare Führungsschienen auf, zwischen denen der untere Werkzeugtisch linear bzw. geradlinig auf den oberen Werkzeugtisch zu und von diesem weg bewegbar geführt ist. Gemäß der Ausführungsfbrm der erfindungsgemäßen Thermoformanlage ist die Antriebseinrichtung für den unteren Werkzeugtisch dabei als Kurbelwellenantrieb ausgebildet.

Damit wird eine symmetrische Führung des unteren Werkzeugtisches erzielt. Dies führt vorteilhaft zu einer besonders genauen Hubbewegung des unteren Werkzeugtisches. Durch die beiderseitige Führung des unteren Werkzeugtisches kann dieser nicht nur sauber parallel zum oberen Werkzeugtisch ausgerichtet und geführt werden, sondern es ergibt sich darüber hinaus in vorteilhafter Weise der zusätzliche Synergieeffekt, den Werkzeugtisch zentral von unten in seiner Mitte vermittels der als Kurbelwellenantrieb ausgebildeten Antriebseinrichtung auf- und ab bzw. zum oberen Werkzeug hin und von diesem weg bewegend anzutreiben. Darüber hinaus kann der Kurbelwellenantrieb in vorteilhafter Weise auch über geeignete Koppelungsmittel an mehreren Punkten am unteren Werkzeugtisch angreifen, so daß größtmögliche Kräfte bei einer möglichst geringen Durchbiegung oder Deformation des unteren Werkzeugtisches auf diesen übertragen werden können.

Der Kurbelwellenantrieb bietet dabei den großen Vorteil einer nach oben hin theoretisch unbegrenzten Taktfrequenz. Mit dem Kurbelwellenantrieb sind erstmals Taktfrequenzen von 40 Takten, 50 Takten oder wesentlich mehr Takten problemlos möglich. Hierbei wird in synergistischer Weise die lineare bzw. geradlinige Bewegung des unteren Werkzeugtisches in Kombination mit dem Kurbelwellenantrieb ausgenutzt, um solcherlei hohe Taktzahlen erstmalig erreichen zu können.

Zwar ist dieses Bewegungsprinzip vom Hubkolbenverbrennungsmotor her bekannt. Dort wird jedoch in umgekehrter Weise die bei der Explosion des komprimierten Kraftstoffgemisches erzeugte Druckkraft über die geradlinige Auf- und Abbewegung des Hubkolbens auf eine Pleuelstange und von dieser auf eine Kurbelwelle übertragen, um eine rotatorische Drehbewegung des Antriebsstranges und damit der Räder des Kraftfahrzeuges zu erreichen. Bei der vorliegenden Erfindung wird erstmals eine von außen aufgeprägte Drehbewegung über den Kurbelwellenantrieb in eine lineare Hubbewegung umgesetzt, um erstmals das untere Werkzeug einer Thermoformanlage einerseits mit ausreichend großen Kräften und andererseits ausreichend schnell antreiben zu können, um Taktfrequenzen von 40 Takten, 50 Takten oder mehr zu erreichen. Solch hohe Taktfrequenzen galten bislang als unerreichbar.

Darüber hinaus bietet die erfindungsgemäße Kombination eines Kurbelwellenantriebes kombiniert mit einer linearen bzw. geradlinigen Führung des unteren Werkzeugtisches den weiteren Vorteil eines gegenüber den bekannten Thermoformanlagen extrem geringen Verschleißes, so daß die Betriebskosten der erfindungsgemäßen Thermoformanlage entscheidend gesenkt und Ausfallzeiten darüber hinaus vermieden werden können. Damit kann nicht nur der Ausstoß einer erfindungsgemäßen Thermoformanlage deutlich erhöht, sondern zugleich über die Minderung der Betriebskosten aufgrund einer besonders zuverlässigen Bauweise insgesamt ein positives Kosten-/Nutzenverhältnis erreicht werden.

Gemäß der erfindungsgemäßen Thermoformanlage ist der Kurbelwellenantrieb derart an der vom oberen Werkzeugtisch abgewandten Seite des unteren Werkzeugtisches innerhalb des Rahmens der Thermoformanlage angeordnet, daß der Mittelpunkt der Kurbelwellenachse, der Mittelpunkt deren Exzenterachsenabschnittes im oberen Umkehrpunkt, die Anlenkpunkte der schwenkbaren Führungsschienen und die Anlenkpunkte am unteren Werkzeugtisch beim Erreichen dessen oberen Umkehrpunktes auf einer gedachten gemeinsamen Linie zu liegen kommen. Damit ist in vorteilhafter Weise sichergestellt, daß im oberen Umkehrpunkt des unteren Werkzeuges und damit beim geschlossenen Zustand des Formwerkzeuges durch den Antrieb eine maximale Kraft aufgrund des linearen Kraftflusses über sämtliche beteiligte Koppelungsglieder hinweg vom Kurbelwellenantrieb bis zum unteren Werkzeugtisch gewährleistet ist, so daß keinerlei Kraftverluste auftreten können oder ungünstige Kraftangriffsverhältnisse vorliegen können. Dies ist insbesondere von Vorteil, wenn in dieser Stellung ein zusätzlicher Impuls eines Stanzhubes zur Erzeugung einer Stanzbewegung über diese Bauteile übertragen werden soll.

Weitere vorteilhafte Ausführungsformen und Aspekte der vorliegenden Erfindung sind Gegenstand der Unteransprüche.

In einer weiter bevorzugten Ausführungsform der erfindungsgemäßen Thermoformanlage ist der Exzenterwellenabschnitt des Kurbelwellenantriebs vermittels einer Pleuelstange im unteren Werkzeugtisch mittig angelenkt. Dies bietet den Vorteil einer direkten Kraftübertragung vom Kurbelwellenantrieb zum unteren Werkzeugtisch. Die aus dem Stand der Technik bekannten mehrteiligen Kniehebelgelenksmechaniken können damit vermieden werden. Ferner bietet dies den Vorteil, daß eine möglichst geringe Anzahl von kraftbelasteten Bauteilen bezüglich einer optimalen Kraftein- und -überleitung beispielsweise vermittels finiter Elementemethoden zu berechnen und ggf. zu optimieren sind. Damit können bereits im Vorfeld auch die Entwicklungskosten niedrig gehalten werden.

Bei einer weiter bevorzugten Ausführungsform der erfindungsgemäßen Thermoformanlage weist die Pleuelstange zum unteren Werkzeugtisch hin einen Y-förmigen Querschnitt auf, so daß diese sich in zwei Armen verzweigt und damit über zwei voneinander beabstandete Punkte am unteren Werkzeugtisch angreift. Dies ermöglicht vorteilhaft eine optimale Einprägung der den unteren Werkzeugtisch bewegenden Kräfte, ohne eine unzulässige Verformung oder Durchbiegung des unteren Werkzeugtisches befürchten zu müssen. Dabei kann durch geschickte Auswahl der Anlenkpunkte der Kraftfluss im unteren Werkzeugtisch derart optimiert werden, daß dieser selbst bei maximal eingeprägter Kraft zur Ausführung eines Stanzhubes keine Durchbiegung oder Deformation des unteren Werkzeugtisches erleidet.

Einer weiter bevorzugten Ausführungsform der erfindungsgemäßen Thermoformanlage zufolge weist der Kurbelwellenantrieb einen elektrischen Servomotor auf. Dieser bietet den Vorteil einer beispielsweise programmierbaren Steuerung oder Regelung, so daß das jeweilige Drehverhalten des Servomotors auf den jeweiligen Anwendungsfall optimal angepaßt werden kann. Derartige Optimierungen der Bewegungsabläufe sind bei den aus dem Stand der Technik als nachteilig bekannten Kurvenscheibenantrieben ausgeschlossen.

Ferner ist bei einer weiter bevorzugten Ausführungsform der Thermoformanlage vorgesehen, daß der elektrische Servomotor den Kurbelwellenantrieb vermittels eines Zahnriemens über eine Riemenscheibe antreibt. Diese bietet eine kostengünstige Antriebstechnik mit bewährten Bauteilen. Daneben sind zur Kraftübertragung vom Servomotor zum Kurbelwellenantrieb auch Zahnräder, Schneckenantriebe oder dergleichen denkbar. Ferner kann der Servomotor direkt an der Kurbelwelle angreifen. Dies bietet dann den Vorteil einer möglichst kompakten Bauweise.

Bei einer weiter bevorzugten Ausführungsform einer erfindungsgemäßen Thermoformanlage wird erstmalig vorgeschlagen, daß der untere Werkzeugtisch in einer vom oberen Werkzeug entfernten Stellung aus dem Rahmen der Thermoformanlage heraus schwenkbar und einer Stapeleinrichtung zuordnenbar ist, so daß der untere Werkzeugtisch auf die dann gegenüberliegende Stapeleinrichtung zuweist und gegebenenfalls auch auf diese zu und von dieser weg bewegt werden kann.

Damit ergeben sich nicht nur die bereits vorstehend diskutierten Vorteile, sondern darüber hinaus kann das untere Werkzeug derart auf die Stapeleinrichtung ausgerichtet und auf diese zugeführt werden, daß die im unteren Werkzeug befindlichen ausgeformten Formkörper optimal verkantungsfrei mit der erforderlichen Wiederholgenauigkeit der dann exakt gegenüber liegenden Stapeleinrichtung übergeben werden können. Dabei ist durch die Verschwenkbarkeit der Schienenanordnung sichergestellt, daß das untere Werkzeug genau gegenüber der Stapeleinrichtung zu liegen kommt und auf diese exakt ausgerichtet werden kann. Die lineare bzw. geradlinige Bewegbarkeit des unteren Werkzeugtisches innerhalb der verschwenkbaren Schienenanordnung bietet darüber hinaus den synergetischen Vorteil, daß das untere Werkzeug beispielsweise vermittels des Kurbelwellenantriebes in einer Hub- bzw. Auf- und Abbewegung auf die Stapeleinrichtung hin und von dieser wieder weg bewegt werden kann, so daß damit beispielsweise bei unterschiedlich großen Formkörpern ein zusätzlicher Ausgleich des vom Formkörper zu überwindenden Wegstückes aus der Kavität des unteren Werkzeugs heraus hinüber zur Stapeleinrichtung möglich ist. Hierbei kann insbesondere in Kombination mit im unteren Werkzeug vorhandenen Auswerfern eine optimale Abstimmung der Übergabebewegung der Formkörper aus den Kavitäten des unteren Werkzeugs heraus in die zugeordneten Aufnahmepunkte der Stapeleinrichtung hinein gewährleistet werden.

Weiterhin von Vorteil ist, daß auf diese Weise unterschiedlich ausgebildete Stapeleinrichtungen zusammen mit der erfindungsgemäßen Thermoformanlage Verwendung finden können, so daß auch in Bezug auf die jeweils herzustellenden Formkörper optimierte Stapeleinrichtungen ohne zusätzlichen Anpassungsaufwand zum Einsatz gelangen können.

Gemäß einer weiter bevorzugten Ausführungsform der erfindungsgemäßen Thermoformanlage sind am unteren Werkzeugtisch Auswerferantriebe zum Heben und Senken von im unteren Werkzeug beweglich angeordneten Auswerfern, vorzugsweise zwischen den beiden, dem unteren Werkzeugtisch zugewandten Armen der Y-förmigen Pleuelstange angeordnet. Dies bietet einerseits den Vorteil, daß das Auswerfen der fertiggestellten Formkörper vermittels der Auswerfer unterstützt und diesen ein zusätzlicher Bewegungsimpuls verliehen werden kann, so daß die Formkörper die Distanz vom unteren Werkzeug zur Stapeleinrichtung problemlos überwinden können. Andererseits bietet die Anordnung der Auswerferantriebe unterhalb des unteren Werkzeugtisches den weiteren Vorteil, daß der dort verbleibende restliche freie Bauraum beispielsweise zwischen den Armen der Y-förmigen Pleuelstange optimal ausgenutzt und damit eine möglichst kompakte Bauform der erfindungsgemäßen Thermoformanlage erreichbar wird.

Gemäß der erfindungsgemäßen Thermoformanlage wird erstmals vorgeschlagen, daß eine zweite Antriebseinrichtung vorgesehen ist, um den unteren Werkzeugtisch mit dessen Antriebseinrichtung innerhalb der diesen linear bzw. geradlinig führenden Führungseinrichtung in einem vorbestimmten Hub zur Erzeugung einer Stanzbewegung anzuheben.

Damit ist beispielsweise in Kombination mit dem Kurbelwellenantrieb nicht nur eine hohe Taktfrequenz als solche gewährleistet, sondern zugleich wiederum eine hohe Taktfrequenz des die Stanzbewegung erzeugenden Stanzhubes möglich. Dabei sind in vorteilhafter Weise Stanzhübe in weniger als 1/10 sec ausführbar. In dem der untere Werkzeugtisch innerhalb dessen geradliniger Führung zur Erzeugung der Stanzbewegung angehoben wird, ist in vorteilhafter Weise sichergestellt, daß das untere Werkzeug immer deckungsgenau mit dem oberen Werkzeug zusammenspielt, so daß ein Verkanten oder dgl. auch beim Stanzen ausgeschlossen und damit ein ungewollter Verschleiß der Schneidkanten vermieden ist. Darüber hinaus ist sichergestellt, daß auf diese Weise die für einen Stanzhub im Vergleich zu den aus dem Stand der Technik bekannten Schneid- oder Quetschbewegungen wesentlich größeren Kräfte problemlos auf den unteren Werkzeugtisch in wesentlich kürzer Zeit übertragen werden können. Zudem ist sichergestellt, daß diese Kräfte nicht nur schnell, d. h. während einer kurzen Zeitspanne, sondern auch mit einer hohen Wiederholfrequenz auf den unteren Werkzeugtisch übertragen werden können, so daß insgesamt eine hohe Taktfrequenz der erfindungsgemäßen Thermoformanlage sowohl hinsichtlich der formgebenden Takte zum Schließen und Öffnen des Formwerkzeugs als auch der Stanztakte zum Austrennen der Formkörper bei geschlossenem Formwerkzeug erreicht werden kann.

Entsprechend einer weiter bevorzugten Ausführungsform der erfindungsgemäßen Thermoformanlage weist die zweite Antriebseinrichtung zur Erzeugung des Stanzhubes einen hydraulisch angetriebenen Hubzylinder auf. Dies bietet den Vorteil, daß im Vergleich zu herkömmlichen Kurvenscheibenantrieben als auch im Vergleich zu den bei der erfindungsgemäßen Thermoformanlage für den Antrieb des unteren Werkzeugtisches bewährten Kurbelantrieb noch weitaus größere Kräfte in wesentlich kürzeren Kraftentfaltungszeiten dem unteren Werkzeugtisch aufgeprägt werden können, so daß ein optimaler Stanzimpuls durch die Auswahl eines hydraulischen Stanzantriebes erzielbar wird. Zudem läßt sich ein hydraulischer Antrieb ähnlich dem vermittels eines elektrischen Servomotors angetriebenen Kurbelwellenantriebs optimal regeln, ist damit einer automatischen Prozeßführung zugängig und kann somit bestmöglich auf den Kurbelwellenantrieb abgestimmt werden. Damit ist in vorteilhafter Weise sichergestellt, daß der Stanzhub immer genau dann aufgeprägt wird, wenn das untere Werkzeug im oberen Umkehrpunkt und damit das Formwerkzeug in geschlossenem Zustand vorliegt.

Gemäß einer weiter bevorzugten Ausfiährungsform beträgt der Hub der zweiten Antriebseinrichtung etwa 3 mm bis 10 mm, vorzugsweise 5 mm bis 8 mm, besonders bevorzugt das 1,1-fache bis 1,3-fache einer Kunststoffoliendicke. Dies gewährleistet optimale Stanzergebnisse beim Austrennen der fertig ausgeformten Formkörper aus der zwischen dem oberen und unteren Werkzeug eingeklemmten Kunststoffolie. Zugleich werden damit besonders saubere Ränder und Stanzkanten am ausgestanzten Formkörperrand erzielt, so daß der Formkörperrand beispielsweise für die Aufbringung eines Deckels oder dergleichen keiner zusätzlichen Nachbearbeitung unterzogen werden muß.

Wie bereits vorstehend diskutiert, wird die gestellte Aufgabe in verfahrenstechnischer Hinsicht durch die Merkmale des Anspruchs 12 gelöst.

Hierbei wird ein Verfahren zur Herstellung von Formkörpern aus Kunststoffolie, wie Becher, Behälter, Deckel, Lebensmittelumverpackungen oder dergleichen, mit einer gattungsgemäßen Thermoformanlage vorgeschlagen das folgende Schritte aufweist: Bereitstellen einer Thermoformanlage gemäß dem Oberbegriff des Anspruchs 1, Zuführen von Kunststoffolie in das Formwerkzeug, Spannen der Kunststoffolie, Schließen des Formwerkzeugs durch Führung des beweglichen unteren Werkzeugtisches vermittels der Führungseinrichtung sowie Antreiben desselben vermittels der Antriebseinrichtung derart, daß dieser relativ zum oberen Werkzeugtisch auf diesen zu bewegt wird, wobei der untere Werkzeugtisch vermittels einer als Kurbelwellenantrieb ausgebildeten Anstriebseinrichtung angetrieben wird, Herstellen der Formkörper bei geschlossenem Formwerkzeug, wobei der untere Werkzeugtisch mit dessen Antriebseinrichtung innerhalb der diesen geradlinig führenden Führungseinrichtung vermittels einer zweiten Antriebseinrichtung angehoben und wieder gesenkt wird, zur Erzeugung einer Stanzbewegung mit vorbestimmtem Stanzhub, Öffnen des Formwerkzeugs durch Führung des beweglichen unteren Werkzeugtisches vermittels der Führungseinrichtung sowie Antreiben desselben vermittels der Antriebseinrichtung derart, daß dieser relativ zum oberen Werkzeugtisch von diesem weg bewegt wird, und Auswerfen der Formkörper ggf. in eine Stapeleinrichtung, wobei der untere Werkzeugtisch vermittels einer verschwenkbaren Führungs-Schienenanordnung zum Schließen und Öffnen des Formwerkzeugs geradlinig geführt und zusammen mit dieser zum Auswerfen der Formkörper verschwenkt wird. Dabei wird erfindungsgemäß erstmals vorgeschlagen, daß der untere Werkzeugtisch vermittels einer verschwenkbaren Führungs-Schienenanordnung zum Schließen und Öffnen des Formwerkzeugs geradlinig geführt und zusammen mit dieser zum Auswerfen der Formkörper verschwenkt wird. Damit werden die bereits vorstehend diskutierten Vorteile und Synergieeffekte erzielt.

Weitere vorteilhafte Ausführungsformen und Aspekte der vorliegenden Erfindung in verfahrenstechnischer Hinsicht sind Gegenstand der weiteren Unteransprüche.

Bei einer bevorzugten Ausgestaltung des erfindungsgemäßen Verfahrens wird der untere Werkzeugtisch vermittels einer als Kurbelwellenantrieb ausgebildeten Antriebseinrichtung angetrieben. Die damit erzielbaren Vorteile und Synergieeffekte sind bereits vorstehend diskutiert. Entsprechend einer weiter bevorzugten Ausgestaltung des erfindungsgemäßen Verfahrens wird der untere Werkzeugtisch in einer vom oberen Werkzeugtisch entfernten Stellung mit der verschwenkbaren Schienenanordnung aus dem Rahmen der Thermoformanlage herausgeschwenkt und einer Stapeleinrichtung zugeordnet, so daß der untere Werkzeugtisch auf die dann gegenüberliegende Stapeleinrichtung zuweist und ggf. auch auf diese zu und von dieser wegbewegt werden kann. Ferner wird gemäß einer weiter bevorzugten Ausführungsform des erfindungsgemäßen Verfahrens der untere Werkzeugtisch mit dessen Antriebseinrichtung innerhalb der diesen geradlinig führenden Führungseinrichtung vermittels einer zweiten Antriebseinrichtung angehoben und wieder gesenkt, zur Erzeugung einer Stanzbewegung mit vorbestimmten Stanzhub. Auch die diesbezüglichen Vorteile und Synergieeffekte sind bereits vorstehend diskutiert.

Die Erfindung wird nachfolgend in Ausführungsbeispielen anhand der Figuren der Zeichnung näher erläutert. Es zeigt:
- Fig. 1: eine Draufsicht auf eine Ausführungsform einer erfindungsgemäßen Thermoformanlage;
- Fig. 2: eine Seitenansicht der in Fig. 1 dargestellten beispielhaften Ausführungsform einer erfindungsgemäßen Thermoformanlage;
- Fig. 3: eine von der Seite gezeigte Detailansicht des Antriebs zum Verschwenken der Führungs-Schienenanordnung der in Fig. 1 und 2 gezeigten Variante einer erfindungsgemäßen Thermoformanlage;
- Fig. 4: einen Schnitt längs der Linie X-X aus Fig. 3;
- Fig.5: die in Fig.1 bis 4 gezeigte Variante in einer schräggestellten Betriebsanordnung;
- Fig.6: eine dreidimensionale schematisch vereinfachte Ansicht der beweglichen Baugruppen einer beispielhaften Ausführungsform einer erfindungsgemäßen Thermoformanlage mit Pfeilen zur Symbolisierung der linearen Hubbewegung des unteren Werkzeugtisches;
- Fig. 7: eine dreidimensionale schematisch vereinfachte Ansicht der in Fig. 6 gezeigten Variante mit anderen Pfeilen zur Symbolisierung der Stanzbewegung des unteren Werkzeugtisches; und
- Fig. 8: eine dreidimensionale schematisch vereinfachte Ansicht der in Fig. 6 und 7 gezeigten Variante wiederum mit anderen Pfeilen zur Symbolisierung der Bewegung beim Verschwenken der Führungs- Schienenanordnung.

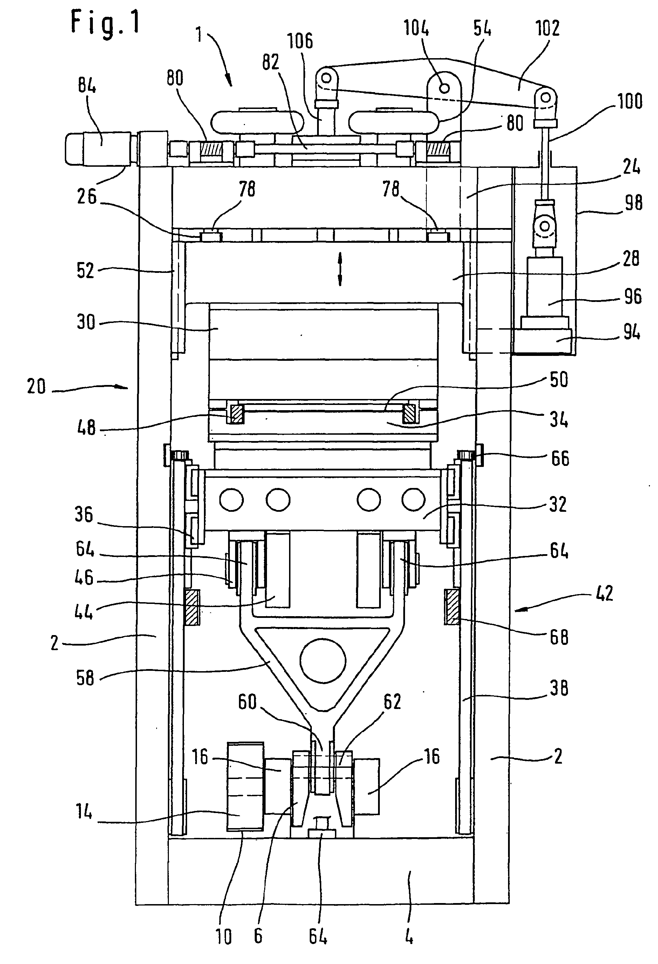

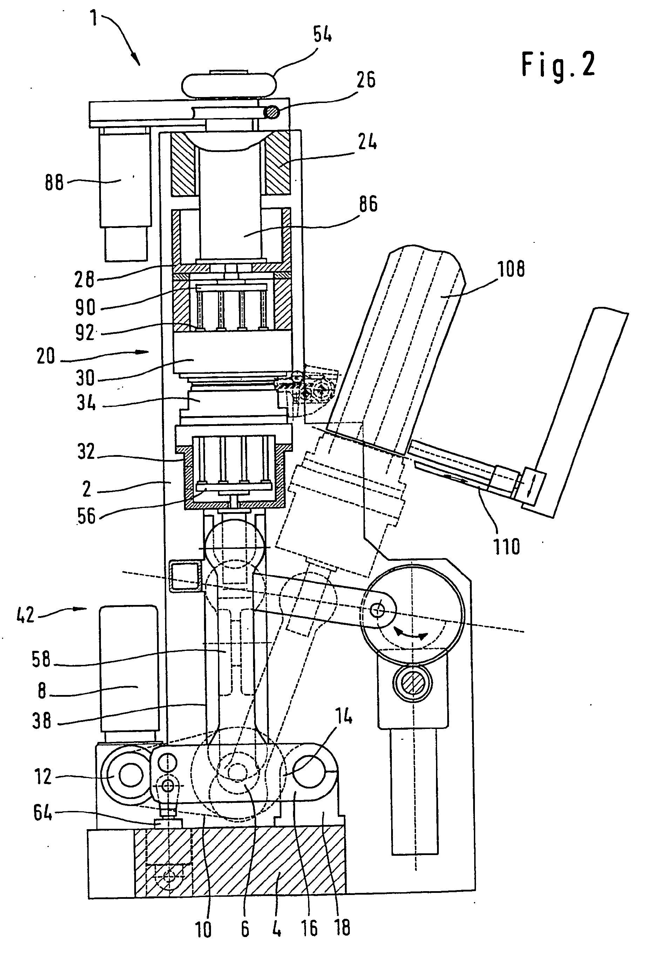

In Fig.1 ist eine beispielhafte Ausführungsform einer erfindungsgemäßen Thermoformanlage 1 in einer Ansicht von vorne dargestellt. Die beweglichen Baugruppen der Thermoformanlage 1 sind in einem Gestell 2 angeordnet. Das Gestell 2 kann beispielsweise in Form von Gestellplatten aus Stahlblech, die spannungsfrei geglüht sind, aufgebaut sein. Eine unten, d.h. zum Boden hin angeordnete Traverse 4 verbindet die Gestellplatten 2 und dient zugleich als Bett für die Lager des Kurbelwellenantriebs 6. Der Kurbelwellenantrieb 6 wird in der hier dargestellten Variante über einen elektrischen Servomotor 8 angetrieben. Dessen Antriebskraft wird über einen Riemen 10 und Riemenscheiben 12 und 14 angetrieben, was insbesondere in Fig. 2 in der seitlichen Ansicht besser erkennbar ist. Der Kurbelwellenantrieb 6 ist bei der hier dargestellten Variante in relativ kurzen Hebelarmen 16 beidseits symmetrisch gelagert, wobei die Hebelarme 16 ihrerseits an einen auf der Traverse 4 befestigten Lagerbock 18 angelenkt sind.

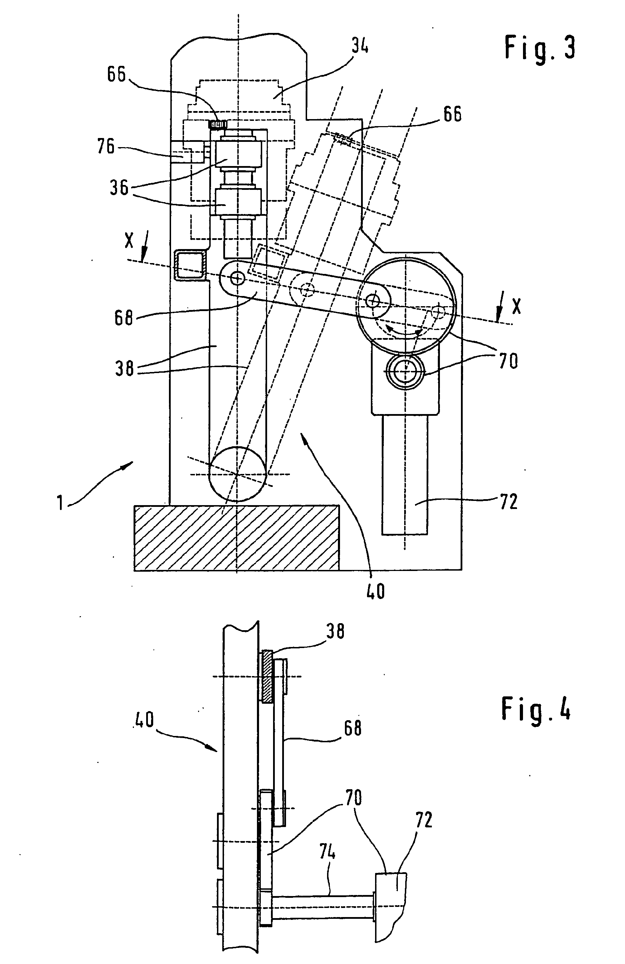

In Fig. 1 als auch in Fig. 2 ist etwa in der Bildmitte das zweiteilige Formwerkzeug 20 der Umformstation der Thermoformanlage 1 in geschlossenem Zustand dargestellt. Eine im oberen Bildabschnitt von Fig. 1 und Fig. 2 erkennbare Traverse 24 verbindet die beiden Gestellplatten 2 oberhalb des zweiteiligen Formwerkzeugs 20 und dient als Basis für einen Antrieb 26 zum Justieren des oberen Werkzeugtisches 28 mit dem daran befestigten oberen Werkzeug 30. Der Antrieb 26 zum Justieren des oberen Werkzeugtisches 28 kann beispielsweise als Feinhub mit Gewinde-Spielausgleich ausgebildet sein. Ein unterer Werkzeugtisch 32 trägt das untere Werkzeug 34 und ist vermittels entsprechend ausgebildeter Linearführungen 36 zwischen den schwenkbaren Führungsschienen 38 der verschwenkbaren Führungsschienenanordnung 40 (vgl. Fig. 3 und 4) der Führungseinrichtung 42 angeordnet. An der Unterseite bzw. am Boden des unteren Werkzeugtisches 32 sind Auswerferzylinder 44 und die oberen Pleuelstangenlager 46 befestigt.

Zwischen dem oberen Werkzeug 30 und dem unteren Werkzeug 34 des in Fig. 1 und 2 geschlossen dargestellten Formwerkzeuges 20 ist ein Kettentransport 48 gezeigt, vermittels dem die Kunststoffolie 50 dem zweiteiligen Formwerkzeug 20 zugeführt und nach dem Ausformen und Ausstanzen der hier nicht mehr dargestellten Formkörper wegtransportiert wird, wobei die Kunststoffolie 50 mit entsprechend geeigneten Mitteln im Bereich des zweiteiligen Formwerkzeuges 20, vorzugsweise bidirektional planar, gespannt wird.

Der obere Werkzeugtisch 28 ist in entsprechend ausgestalteten Linearführungen 52 zwischen den Gestellplatten 2 geführt. Das untere Werkzeug 34 kann beispielsweise eine Anschraubfläche von 490 mm x 1040 mm haben. Damit sind beispielsweise vier Reihen à acht Kavitäten für 32 Formkörper bei einem Formkörperdurchmesser von etwa 75 mm realisierbar. Dies bedeutet eine gesamte Stanzlänge aller durchzustanzenden Kanten von 7640 mm, was eine Gesamtstanzkraft von etwa 400 kN notwendig macht.

Das obere Werkzeug 30 ist beispielsweise über nicht näher dargestellte Distanzstücke am oberen Werkzeugtisch 28 befestigt. Nicht näher dargestellte Führungsschienen erleichtern die Montage der Werkzeuge. Ein Gewindespielausgleich 54 dient zum Ausgleich von Spiel beispielsweise beim Feinhubantrieb 26 des oberen Werkzeugtisches 28. Die Linearführungen 36 für den unteren Werkzeugtisch 32 weisen eine spielfreie Einstellung auf und gewährleisten eine exakte Führung des unteren Werkzeuges 34. Die Linearführungen 52 des oberen Werkzeugtisches 28 weisen nicht näher dargestellte spielfrei einstellbare Gleitführungen auf.

Die unterhalb des unteren Werkzeugtisches 32 angeordneten Auswerferantriebe 44 für die in Fig. 2 in einem dortigen Teilschnitt erkennbaren Auswerfer 56 weisen zwei pneumatische Zylinder mit einer Hubbegrenzung auf.

Die vom Kurbelwellenantrieb 6 angetriebene Pleuelstange 58, die auch als Kurbelstange für den Hubantrieb des unteren Werkzeugtisches 32 bezeichnet werden kann, ist in der hier dargestellten Variante in Form eines Dreiecks bzw. Y-förmig ausgebildet. Die Pleuelstange 58 ist mit einem ersten Pleuelstangenabschnitt 60 am Exzenterwellenabschnitt 62 des Kurbelwellenantriebs 6 angelenkt. Die beiden in Fig. 1 und 2 nach oben weisenden Arme 64 der Y-förmigen Pleuelstange 58 sind an den Pleuelstangenlagem 46 des unteren Werkzeugtisches 32 angelenkt. Diese beiden oberen Pleuelstangenlager 46 sind hier möglichst derart angeordnet, daß eine Durchbiegung des unteren Werkzeugtisches 32 als auch dessen Eigengewicht möglichst gering gehalten werden können. Die Y-förmig ausgebildete Pleuelstange 58 hat am unteren Pleuelstangenabschnitt 60 der hier dargestellten Variante in vorteilhafter Weise nur ein Lager, so daß bereits ein Kurbeltrieb genügt.

Wie bereits vorstehend ausgeführt ist der Kurbelwellenantrieb 6 mit einer zweifachen Lagerung in biegesteifer Ausführung vorhanden. Die diesbezüglichen Kurbellager können zum Zwecke einer leichten Montage geteilt sein. Der Kurbelwellenantrieb 6 ist mittig in Hebelarmen 16 gelagert, die eine Art Doppelschwinge ausbilden. Diese ist ihrerseits mit deren rechter Seite vermittels des Lagerbocks 18 auf der Traverse 4 gelagert. An der linken Seite dieser Doppelschwinge greift der Stanzantrieb 64 an. Der Stanzantrieb 64 besteht beispielsweise aus einem Hydraulikzylinder und einer zugeordneten Hydraulikanlage, die über den Hydraulikzylinder einen schlagartigen Stanzhub erzeugt, welcher über die Doppelschwinge 16, den Kurbelwellenantrieb 6, die Pleuelstange 58, die Lager 46 auf den unteren Werkzeugtisch 32 und damit auf das untere Werkzeug 34 übertragen wird.

Der Antrieb des Kurbelwellenantriebs 6 kann - wie bereits vorstehend erwähnt - als Hubantrieb einen Servomotor 8 aufweisen, der über Getriebe, Zahnriemen, Zahnkettentriebe oder dergleichen in spielarmer Ausführung auf den Kurbelwellenantrieb 6 einwirkt. Das Schließen und das Öffnen des zweiteiligen Formwerkzeuges 20 entspricht dann je 180° Umdrehung an der Kurbelwelle.

Die bereits in Fig. 1 und 2 dargestellten Schwenkhebel 38 zur verschwenkbaren Aufnahme des unteren Werkzeugtisches 32 weisen in der hier dargestellten Variante beispielsweise die näher in Fig. 3 dargestellten, als Kurvenrollen ausgebildeten, Schwenkhebelseitenführungen 66 auf. Die beispielsweise als Kurvenrollen ausgebildeten seitlichen Führungen 66 der Schwenkhebel 38 laufen auf nicht näher dargestellten gehärteten Schienen und sind spielfrei einstellbar zur exakten Führung des unteren Werkzeugs 34.

Als Antrieb zum Verschwenken der schwenkbaren Führungsschienen 38 der verschwenkbaren Führungs-Schienenanordnung 40 ist beidseitig des unteren Werkzeugtisches 32 eine Kurbelstange 68 vorgesehen. Als Antrieb 70 zur Erzeugung der Schwenkbewegung des unteren Werkzeuges 34 über die schwenkbaren Führungsschienen 38 kann ein auf beide Führungsschienen 38 einwirkender Kurbelstangenschwenkantrieb 68 vorgesehen sein, der beispielsweise durch einen Servo-Getriebemotor 72 und eine Gleichlaufwelle 74 angetrieben wird. Diese Details sind in Fig. 4, die einen Schnitt längs der Linie X-X von Fig. 3 zeigt, näher dargestellt.

Zur Begrenzung der Schwenkbewegung in den Rahmen bzw. das Gestell 2 hinein ist ein Schwenkhebelanschlag 76 vorgesehen, wie in Fig. 3 dargestellt. Dieser Anschlag 76 für den Schwenkhebel 38 ist zur exakten Positionierung des unteren Werkzeuges 32 einstellbar.

Der Antrieb 84 zur Einstellung des oberen Werkzeugtisches 28, der beispielsweise als Feinantrieb ausgebildet sein kann, dient nicht nur beispielsweise zur Einstellung des Stanzhubes, sondern kann auch zur Einschaltung oder Ausschaltung des Stanzhubes herangezogen werden. Zwei in Fig. 1 und 2 nur knapp erkennbare Gewindespindeln 78 werden beispielsweise über Schneckengetriebe 80 über eine Gleichlaufwelle 82 vermittels eines Getriebemotores 84 angetrieben.

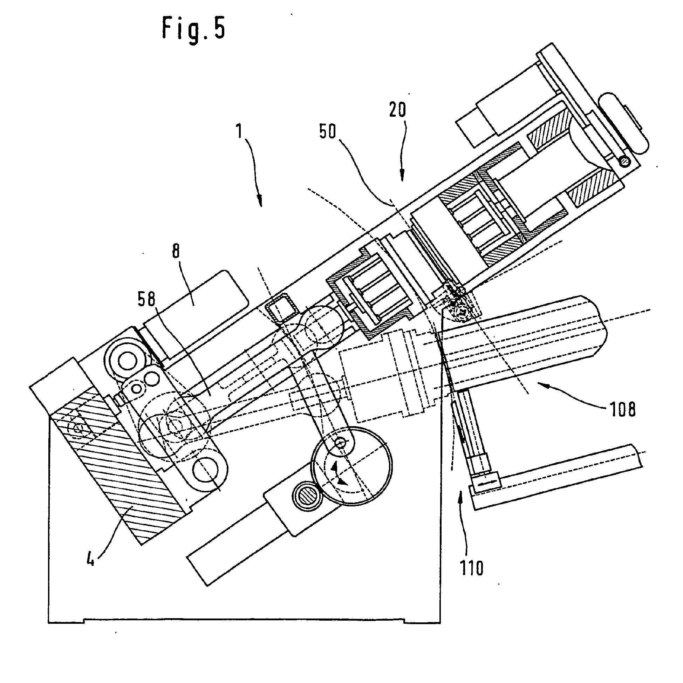

In der hier dargestellten Variante gemäß Fig. 1 bis 5 können zwei beispielsweise als pneumatische Balg-Zylinder ausgebildete Gewindespielausgleiche 54 über nicht näher dargestellte Zugstangen den oberen Werkzeugtisch 28 nach oben ziehen, um das Flankenspiel zwischen Spindel und Mutter aufzuheben.

Wie in Fig. 2 näher dargestellt, ist eine Vorstreckereinheit 86 vorgesehen. Die Vorstreckereinheit 86 weist unter anderem in der hier dargestellten Variante einen als Servomotor ausgebildeten Vorstreckerantrieb 88 auf, der über einen in Fig. 2 nicht näher dargestellten Zahnriementrieb und Planetenrollen-Gewindetrieb, dessen Mutter durch lösbare Kupplungen mit der Vorstreckerplatte 90 und den daran angeordneten Vorstreckem 92 verbunden ist, auf. Dabei kann der Vorstreckerantrieb auch einen hochdynamischen Servomotor 88 aufweisen.

In der in Fig. 1 näher dargestellten alternativen Variante des Vorstreckerantriebs der Vorstreckereinheit 86 kann diese eine Konsole 94 aufweisen, die als Vorstreckerantrieb einen hydraulischen Zylinder 96 trägt. Der hydraulische Zylinder 96 wird mit der Konsole 94 relativ zum oberen Werkzeugtisch 28 ruhend mit diesem linear verschoben. Der Abstand zwischen dem hydraulischen Zylinder 96 zum oberen Werkzeugtisch 28 bleibt damit immer konstant. Der Hydraulikzylinder 96 ist durch ein Gehäuse 98 gekapselt, so daß selbst bei geringfügigen Leckagen kein Hydrauliköl austreten kann. Eine Schubstange 100 ist am Hydraulikzylinder 96 angelenkt, wie in Fig. 1 dargestellt, und ist mit ihrem, dem Hydraulikzylinder 96 abgewandten Ende am in der hier dargestellten Variante rechten Ende eines Kipphebels 102 angelenkt. Der Kipphebel 102 ist vermittels einer Lagerung 104 schwenkbar gehalten. Die Lagerung 104 greift dabei über einen geeigneten Lagerbock wiederum am oberen Werkzeugtisch 28 an. Am linken Ende des Kipphebels 102 ist die Vorstreckerstange 106 angelenkt, die mit der Vorstreckerplatte 90 und den daran angeordneten Vorstreckem 92 in Verbindung steht. Der hydraulische Zylinder 96 für den Antrieb der Vorstrecker 92 kann eine Servosteuerung aufweisen, die eine programmierbare Steuerung für den Hub des Zylinders 96 enthält. Das erforderliche Hydraulikaggregat kann im Maschinenfuß angeordnet werden. Die Vorstreckerstange 106 kann über eine Ausgleichkupplung mit der Vorstreckerplatte 90 im oberen Werkzeug 30 verbunden sein. Das Gehäuse 98 für den Hydraulikzylinder 96 dient nicht nur zum Auffangen eventueller Leckagen, sondern kann ebenso die Servosteuerung tragen und zudem Sensoren oder dergleichen enthalten, um eventuell auftretende Leckagen zu melden und über Mittel verfügen, um diese abzuleiten. Entsprechendes gilt auch für die Hydraulikleitungen.

Wie in Fig. 2 dargestellt, kann der erfindungsgemäßen Thermoformanlage I eine Stapeleinrichtung 108 zugeordnet sein, welche die fertig hergestellten Formkörper nach dem Auswerfen aus den Kavitäten des unteren Werkzeuges 34 entgegennimmt, stapelt und wegführt. Die Stapeleinrichtung 108 kann hierzu beispielsweise einen Rechen 110 zum Abtransport der ausgeworfenen Formkörper aufweisen.

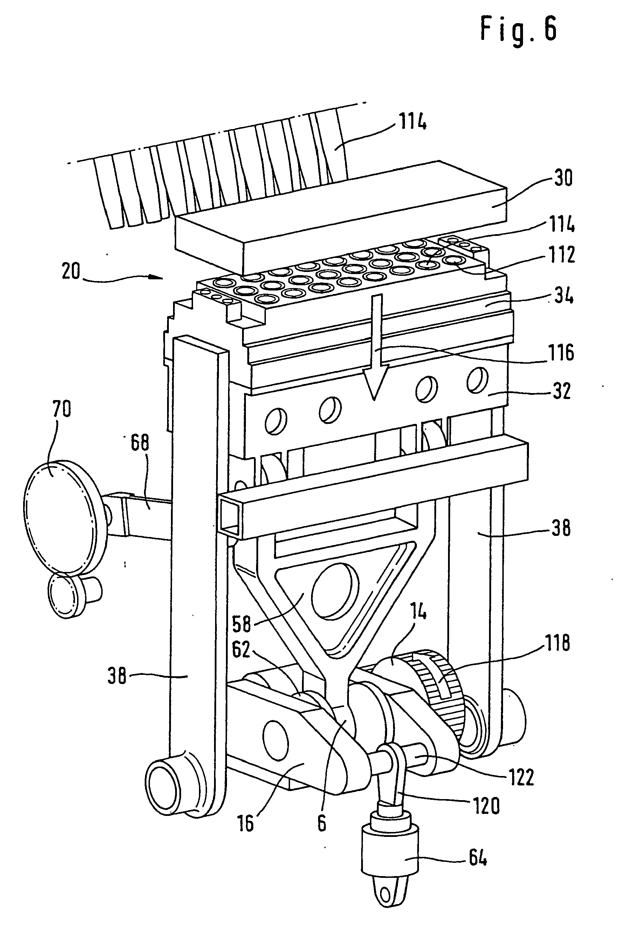

Die in Fig. 1 bis 5 dargestellte beispielhafte Ausführungsform einer erfindungsgemäßen Thermoformanlage I ist in Fig. 6 bis 8 in schematisch vereinfachter Weise in dreidimensionalen Ansichten zur Veranschaulichung der Bewegungsabläufe reduziert auf die im wesentlichen bewegten Bauteile gezeigt. Gleiche Elemente oder gleich- oder ähnlich wirkende Elemente würden hierbei zur Vereinfachung mit denselben Bezugszeichen wie vorstehend diskutiert versehen.

In Fig. 6 ist die Erzeugung der Hubbewegung des unteren Werkzeuges 32 in schematisch vereinfachter Weise dargestellt. In der hier dargestellten Stellung ist das untere Werkzeug 32 vom oberen Werkzeug 30 entfernt. Es sind drei Reihen à acht Kavitäten 112 mit den darin enthaltenen ausgeformten Formkörpern 114 erkennbar. Der Pfeil 116 symbolisiert die hier abwärts gerichtete lineare Bewegung des unteren Werkzeuges 34 bzw. des unteren Werkzeugtisches 32. Der Werkzeugtisch 32 ist dabei zwischen den verschwenkbaren Führungsschienen 38 linear geführt. Der Pfeil 118 symbolisiert den servoelektrischen Antrieb für die geradlinige Bewegung des unteren Werkzeugs 34 relativ zur schwenkbaren Führungsschiene 38.

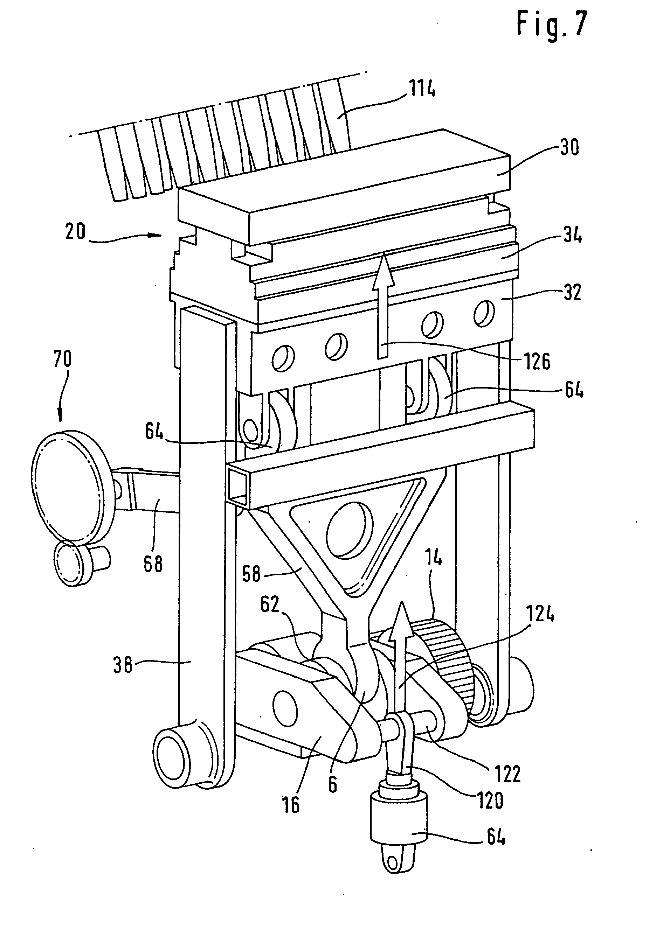

Der Stanzzylinder 64 ist über eine Schub-Zugstange 120 und einen Schub-Zugwelle 122 mit den beiden Hebelarmen 16, die eine Doppelschwinge bilden, verbunden, um einen Stanzhub wie dies in Fig. 7 mit den Pfeilen 124 und 126 angedeutet ist, auf das untere Werkzeug 34 zu übertragen. Damit können die fertig hergestellten Formkörper 114 aus der hier nicht näher dargestellten Kunststoffolie 50 ausgestanzt werden. Der hydraulische Antrieb für das Stanzen wird in der in Fig.7 dargestellten schematisch vereinfachten Variante bei stillstehendem Exzenterwellenabschnitt 62 des Kurbelwellenantriebs 6 und stillstehendem Schwenkantrieb 70 betätigt.

Der Kurbelwellenantrieb 6 überträgt die Bewegungskraft zum Heben und Senken des unteren Werkzeugtisches 32 bzw. zum Öffnen und Schließen des Formwerkzeuges 20 vermittels einer hier Y-förmig dargestellten Pleuelstange 58 auf den unteren Werkzeugtisch 32. Dabei weisen die beiden oberen Arme 64 der Pleuelstange 58 eine geringe Stützweite auf.

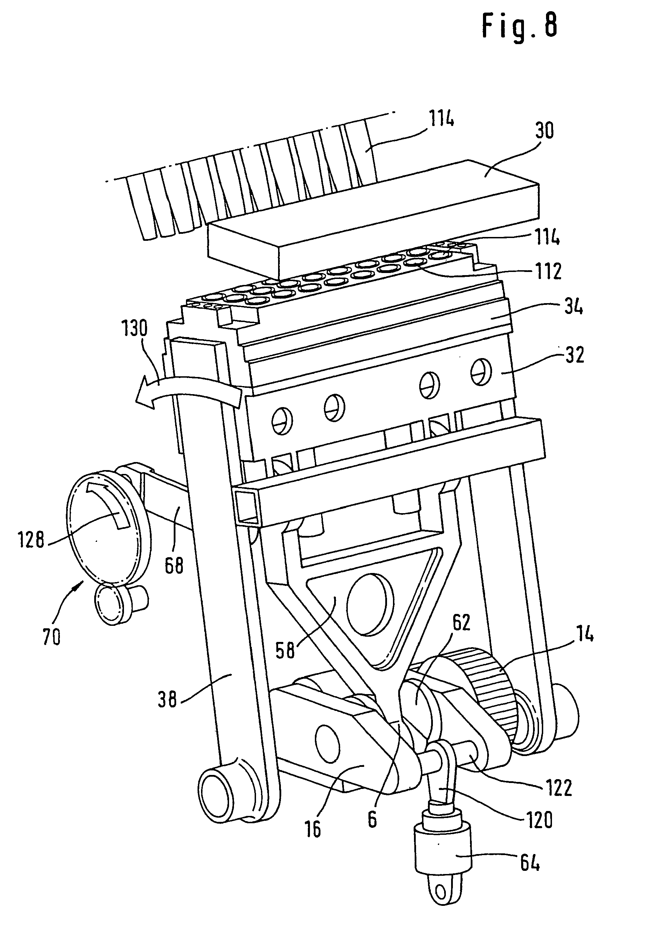

Wie vorstehend diskutiert ist in Fig. 7 in schematisch vereinfachter Weise die Erzeugung des Stanzhubes dargestellt. Dementsprechend ist in Fig. 8 in schematisch vereinfachter Weise die Erzeugung der Schwenkbewegung gezeigt.

Dabei dient ein servoelektrischer Antrieb 70 zur Erzeugung der Schwenkbewegung der verschwenkbaren Führungsschiene 38 mit dem darin geradlinig bzw. linear geführten unteren Werkzeug 34. Dies ist mit den Pfeilen 128 und 130 symbolisiert.

Mit der vorliegenden Erfindung wird erstmals in vorteilhafter Weise eine Thermoformanlage vorgeschlagen, zur Herstellung von Formkörpern aus Kunststoffolie, wie Becher, Behälter, Deckel, Lebensmittelumverpackungen oder dergleichen, mit einer ein zweiteiliges Formwerkzeug aufweisenden Umformstation. Das zweiteilige Formwerkzeug weist einen einstellbar feststellbaren oberen Werkzeugtisch mit einem oberen Werkzeug mit darin beweglich gelagerten Vorstreckern und einen beweglichen unteren Werkzeugtisch mit einem unteren Werkzeug mit Kavitäten auf. Der bewegliche untere Werkzeugtisch ist vermittels einer Führungseinrichtung geführt und durch eine Antriebseinrichtung relativ zum oberen Werkzeugtisch auf diesen zu und von diesem weg bewegbar. Hierbei weist die Führungseinrichtung erfindungsgemäß erstmals eine verschwenkbare Führungs-Schienenanordnung auf, vermittels derer der untere Werkzeugtisch geradlinig führbar und zusammen mit dieser schwenkbar ist. Ferner betrifft die vorliegende Erfindung einer Verfahren zur Herstellung der Formkörper aus Kunststoffolie.

Neben den vorstehend bereits diskutierten Vorteilen und Aspekten der erfindungsgemäßen Thermoformanlage bietet dieses die folgenden weiteren Vorteile:

Das untere Werkzeug und der untere Werkzeugtisch führen beim Öffnen und Schließen des Formwerkzeugs keine Kippbewegung, sondern nur eine Linearbewegung aus. Dies gewährt eine präzisere Werkzeugtischführung als beim Stand der Technik. Darüber hinaus sind die Massen bei einer Linearbewegung wesentlich besser zu beherrschen als bei einem Kippen, welches nur schwer beherrschbare Dreh-Schwingungen erzeugen kann. Derart wechselnde Massenkräfte erforderten bei den aus dem Stand der Technik bekannten nachteiligen Kurvenscheiben zusätzliche Komplementärkurvenscheiben, was zu einer weiter nachteiligen Erhöhung des konstruktiven Aufwands führte. Der bei der erfindungsgemäßen Thermoformanlage vorgeschlagene Kurbelantrieb kann demgegenüber Massenkräfte in beiden Richtungen aufnehmen, so daß diese bereits hierdurch leichter beherrschbar werden. Zudem wird vermittels des Kurbelwellenantriebs ein fast sinusförmiges Geschwindigkeitsprofil erzeugt. Dies bietet den weiteren Vorteil keiner abrupten Beschleunigungen oder Verzögerungen des unteren Werkzeuges. Indem die Pleuel- bzw. Kurbelstange dreieck- bzw. Y-förmig ausgebildet ist und unter dem unteren Werkzeug angreift, ergibt sich nicht nur in vorteilhafter Weise eine geringe, gegen Null gehende Durchbiegung des unteren Werkzeugtisches, sondern es genügt in weiter vorteilhafter Weise bereits ein einziger Kurbelwellenantrieb. Dies hilft vorteilhaft die Anzahl der Bauteile zu reduzieren und damit die Kosten zu senken. Zum Auswerfen der Formkörper wird das untere Werkzeug mit einem großen Radius vermittels der verschwenkbaren Führungs-Schienenanordnung geschwenkt. Dies bietet nicht nur die bereits vorstehend diskutierten Vorteile, sondern es kann die aus dem Stand der Technik häufig als nachteilig empfundene sog. Fängerplatte entfallen. Zudem kann die Stapeleinrichtung bzw. deren Stapelkorb stationär ausgeführt werden. Dies ergibt in vorteilhafter Weise wiederum eine Vereinfachung der Konstruktion. Ferner erzeugt der separate hydraulische Stanzantrieb im Gegensatz zu den aus dem Stand der Technik bekannten nachteiligen Kurvenscheiben mit Stanznocken eine sozusagen schlagartige Stanzbewegung. Dies führt in vorteilhafter Weise zu längeren Standzeiten der Werkzeuge. Weiterhin von Vorteil ist, daß bei der schlagartigen Stanzbewegung die erreichbaren Zeiten für das Stanzen nicht nur weniger als 1/10 s sondern sogar weniger als 30 ms betragen.

Mit der erfindungsgemäßen Thermoformanlage können Kunststoffolien aus PP, PS, PE, PET, ABS oder PVC verarbeitet werden. Die der Thermoformanlage als Folienbahn zugeführte Kunststoffolie kann dabei eine Folienbahnbreite von wenigstens 250 mm bis 750 mm bei einer Folienbahndicke von wenigstens 0,3 mm bis 4 mm aufweisen. Die zwischen dem oberen und dem unteren Werkzeug verfügbare Formfläche beträgt wenigstens 700 mm x 450 mm. Die maximale Schließkraft beträgt wenigstens 400 kN bei einer maximalen Schnittlänge von wenigstens 8400 mm.

### Bezugszeichenliste

- 1: Thermoformanlage
- 2: Gestell bzw. Rahmen
- 4: untere Traverse
- 6: Kurbelwellenantrieb
- 8: elektrischer Servomotor
- 10: Riemen
- 12: Riemenscheibe
- 14: Riemenscheibe
- 16: Hebelarm
- 18: Lagerbock
- 20: zweiteiliges Formwerkzeug
- 22:
- 24: obere Traverse
- 26: Antriebeinstellung oberes Werkzeug
- 28: oberer Werkzeugtisch
- 30: oberes Werkzeug
- 32: unterer Werkzeugtisch
- 34: unteres Werkzeug
- 36: Linearführung unterer Werkzeugtisch
- 38: schwenkbare Führungsschienen
- 40: Führungs-Schienenanordnung
- 42: Führungseinrichtung
- 44: Auswerferantrieb
- 46: Pleuelstangenlager
- 48: Kettentransport
- 50: Kunststoffolie
- 52: Linearführung oberer Werkzeugtisch
- 54: Gewinde-Spielausgleich
- 56: Auswerfer
- 58: Pleuelstange
- 60: erster Pleuelstangenabschnitt
- 62: Exzenterwellenabschnitt
- 64: Stanzantrieb
- 66: Schwenkhebel-Seitenführung
- 68: Kurbelstangenschwenkantrieb
- 70: Schwenkantrieb
- 72: Servo-Getriebemotor
- 74: Gleichlaufwelle
- 76: Schwenkhebel-Anschlag
- 78: Gewindespindel
- 80: Schneckengetriebe
- 82: Gleichlaufwelle
- 84: Getriebemotor
- 86: Vorstreckereinheit
- 88: Vorstreckerantrieb
- 90: Vorstreckerplatte
- 92: Vorstrecker
- 94: Konsole für Vorstreckerantrieb
- 96: Hydraulischer Vorstreckzylinder
- 98: Gehäuse
- 100: Schubstange
- 102: Kipphebel
- 104: Lagerung Kipphebel
- 106: Vorstreckerstange
- 108: Stapeleinrichtung
- 110: Rechen
- 112: Kavitäten
- 114: Formkörper
- 116: Pfeil symbolisiert lineare Bewegung
- 118: Pfeil symbolisiert drehenden Kurbelantrieb
- 120: Schub-Zugstange
- 122: Schub-Zugwelle
- 124: Pfeil symbolisiert Stanzhub
- 126: Pfeil symbolisiert Stanzbewegung
- 128: Pfeil symbolisiert Schwenkantrieb
- 130: Pfeil symbolisiert Verschwenkung

## Patentansprüche

1. Thermoformanlage (1) zur Herstellung von Formkörper (114) aus Kunststoffolie (50), wie Becher, Behälter, Deckel, Lebensmittelumverpackungen oder dergleichen, mit einer ein zweiteiliges Formwerkzeug (20) aufweisenden Umformstation,
wobei das zweiteilige Formwerkzeug (20) einen einstellbar feststellbaren oberen Werkzeugtisch (28) mit einem oberen Werkzeug (30) mit darin beweglich gelagerten Vorstreckern (92) und einen beweglichen unteren Werkzeugtisch (32) mit einem unteren Werkzeug (34) mit Kavitäten (112) aufweist,
wobei der bewegliche untere Werkzeugtisch (32) vermittels einer Führungseinrichtung (42) geführt und durch eine erste Antriebseinrichtung relativ zum oberen Werkzeugtisch (28) auf diesen zu und von diesem weg bewegbar ist,
**dadurch gekennzeichnet, daß**
die Führungseinrichtung (42) eine verschwenkbare Führungs-Schienenanordnung (40) aufweist, vermittels derer der untere Werkzeugtisch (32) geradlinig führbar und zusammen mit dieser schwenkbar ist,
wobei die verschwenkbare Führungs-Schienenanordnung (40) der Führungseinrichtung (42) zwei an einem Rahmen (2) der Thermoformanlage (1) angelenkte schwenkbare Führungsschienen (38) aufweist, zwischen denen der untere Werkzeugtisch (32) geradlinig auf den oberen Werkzeugtisch (28) zu und von diesem weg (116) bewegbar geführt ist,
daß die erste Antriebseinrichtung für den unteren Werkzeugtisch (32) als Kurbelwellenantrieb (6) ausgebildet ist,
wobei ein Exzenterwellenabschnitt (62) des Kurbelwellenantriebs (6) vermittels einer Pleuelstange (58) am unteren Werkzeugtisch (32) angelenkt ist,
daß der Kurbelwellenantrieb (6) des unteren Werkzeugtisches (32) derart an der vom oberen Werkzeugtisch (28) abgewandten Seite des unteren Werkzeugtisches (32) innerhalb des Rahmens (2) der Thermoformanlage (1) angeordnet ist, daß der Mittelpunkt der Kurbelwellenachse, der Mittelpunkt deren Exzenterachsenabschnitts (62) im oberen Umkehrpunkt, die Anlenkpunkte der schwenkbaren Führungsschienen (38) und die Anlenkpunkte am unteren Werkzeugtisch (32) beim Erreichen dessen oberen Umkehrpunktes auf einer gedachten gemeinsamen Geraden liegen,
daß der untere Werkzeugtisch (32) zusammen mit dessen erster Antriebseinrichtung innerhalb der diesen geradlinig führenden Führungseinrichtung (42) in einem vorbestimmten Hub mittels einer zweiten Antriebseinrichtung zur Erzeugung einer Stanzbewegung (124, 126) anhebbar ist, und
daß am unteren Werkzeugtisch (32) Auswerferantriebe (44) zum Heben und Senken von im unteren Werkzeug (34) beweglich angeordneten Auswerfern (56) angeordnet sind.

2. Thermoformanlage (1) nach Anspruch 1 **dadurch gekennzeichnet, daß** der Exzenterwellenabschnitt (62) des Kurbelwellenantriebs (6) mittig am unteren Werkzeugtisch (32) angelenkt ist.

3. Thermoformanlage (1) nach Anspruch 1 oder 2, **dadurch gekennzeichnet, daß** die Pleuelstange (58) zum unteren Werkzeugtisch (32) hin einen Y-förmigen Querschnitt aufweist, so daß diese sich in zwei Arme (64) verzweigt und damit über zwei voneinander beabstandete Punkte (46) am unteren Werkzeugtisch (32) angreift.

4. Thermoformanlage (1) nach einem der Ansprüche 1 bis 3, **dadurch gekennzeichnet, daß** der Kurbelwellenantrieb (6) einen elektrischen Servomotor (8) aufweist.

5. Thermoformanlage (1) nach Anspruch 4, **dadurch gekennzeichnet, daß** der elektrische Servomotor (8) den Kurbelwellenantrieb (6) vermittels eines Zahnriemens (10) über Riemenscheiben (12, 14) antreibt.

6. Thermoformanlage (1) nach einem der Ansprüche 1 bis 5, **dadurch gekennzeichnet, daß** der untere Werkzeugtisch (32) in einer vom oberen Werkzeugtisch (28) entfernten Stellung mit der verschwenkbaren Schienenanordnung (38) aus dem Rahmen (2) der Thermoformanlage (1) herausschwenkbar (130) und einer Stapeleinrichtung (108) zuordnenbar ist, so daß der untere Werkzeugtisch (32) auf die dann gegenüberliegende Stapeleinrichtung (108) zuweist und auf diese zu und von dieser weg bewegt werden kann.

7. Thermoformanlage (1) nach einem der Ansprüche 1 bis 6, **dadurch gekennzeichnet, daß** die Auswerferantriebe (44) zwischen den beiden dem unteren Werkzeugtisch (32) zugewandten Armen (64) der Y-förmigen Pleuelstange (58), angeordnet sind.

8. Thermoformanlage (1) nach einem der Ansprüche 1 bis 7, **dadurch gekennzeichnet, daß** die zweite Antriebseinrichtung zur Erzeugung des Stanzhubes einen hydraulisch angetriebenen Hubzylinder (64) aufweist.

9. Thermoformanlage (1) nach einem der Ansprüche 1 bis 8, **dadurch gekennzeichnet, daß** der Hub der zweiten Antriebseinrichtung etwa 3 mm bis 10 mm beträgt.

10. Thermoformanlage (1) nach einem der Ansprüche 1 bis 8, **dadurch gekennzeichnet, daß** der Hub der zweiten Antriebseinrichtung etwa 5 mm bis 8 mm beträgt.

11. Thermoformanlage (1) nach einem der Ansprüche 1 bis 8, **dadurch gekennzeichnet, daß** der Hub der zweiten Antriebseinrichtung etwa das 1,1-fache bis 1,3-fache der Kunststoffoliendicke beträgt.

12. Verfahren zur Herstellung von Formkörpern (114) aus Kunststoffolie (50), wie Becher, Behälter, Deckel, Lebensmittelumverpackungen oder dergleichen, mit folgenden Schritten:
- Bereitstellen einer Thermoformanlage (1) gemäß dem Oberbegriff des Anspruchs 1,
- Zuführen von Kunststoffolie (50) in das Formwerkzeug (20),
- Spannen der Kunststoffolie (50),
- Schließen des Formwerkzeugs (20) durch Führung des beweglichen unteren Werkzeugtisches (32) vermittels der Führungseinrichtung (42) sowie Antreiben desselben vermittels der Antriebseinrichtung derart, daß dieser relativ zum oberen Werkzeugtisch (28) auf diesen zu bewegt wird, wobei
- der untere Werkzeugtisch (32) vermittels einer als Kurbelwellenantrieb (6) ausgebildeten Anstriebseinrichtung angetrieben wird (118),
- Herstellen der Formkörper (114) bei geschlossenem Formwerkzeug (20), wobei
- der untere Werkzeugtisch (32) mit dessen Antriebseinrichtung innerhalb der diesen geradlinig führenden Führungseinrichtung (42) vermittels einer zweiten Antriebseinrichtung angehoben und wieder gesenkt wird, zur Erzeugung einer Stanzbewegung (124, 126) mit vorbestimmtem Stanzhub,
- Öffnen des Formwerkzeugs (20) durch Führung des beweglichen unteren Werkzeugtisches (32) vermittels der Führungseinrichtung (42) sowie Antreiben desselben vermittels der Antriebseinrichtung derart, daß dieser relativ zum oberen Werkzeugtisch (28) von diesem weg bewegt wird, und
- Auswerfen der Formkörper (114) ggf. in eine Stapeleinrichtung (108),wobei
- der untere Werkzeugtisch (32) vermittels einer verschwenkbaren Führungs-Schienenanordnung (40) zum Schließen und Öffnen des Formwerkzeugs (20) geradlinig geführt (116) und zusammen mit dieser zum Auswerfen der Formkörper (114) verschwenkt (130) wird.

13. Verfahren nach Anspruch 12, **dadurch gekennzeichnet, daß** der untere Werkzeugtisch (32) in einer vom oberen Werkzeugtisch (28) entfernten Stellung mit der verschwenkbaren Schienenanordnung (40) aus dem Rahmen (2) der Thermoformanlage (1) herausgeschwenkt (130) und einer Stapeleinrichtung (108) zugeordnet wird, so daß der untere Werkzeugtisch (32) auf die dann gegenüberliegende Stapeleinrichtung (108) zuweist und auf diese zu und von dieser weg bewegt werden kann.

## Claims

1. A thermoforming apparatus (1) for producing shaped bodies (114) of plastic sheet (50), such as cups, containers, lids, secondary packagings for foodstuffs or the like, comprising a forming station with a two-part forming tool (20),
wherein the two-part forming tool (20) comprises an upper tool table (28) adapted to be adjustably fixed and having an upper tool (30) with pre-stretch means (92) movably mounted therein, and a movable lower tool table (32) having a lower tool (34) with cavities (112),
wherein said movable lower tool table (32) is guided through the intermediary of guide means (42) and capable of being approached to said upper tool table (28)and moved away from it by first drive means,
**characterized in that**
said guide means (42) include a rotatable guide rail assembly (40) whereby said lower tool table (32) may be guided rectilinearly and rotated together with said guide rail assembly,
wherein the rotatable guide rail assembly (40) includes two guide rails (38), pivot-mounted on a frame (2) of the thermoforming apparatus (1), with the lower tool table (32) being guided movably between those, in a rectilinear manner, to be approached towards the upper tool table (28) and moved away (116) from the latter,
said first drive means for said lower tool table (32) is formed as a crankshaft drive mechanism (6),
wherein an eccentric shaft portion (62) of said crankshaft drive mechanism (6) is linked to said lower tool table (32) through the intermediary of a connecting rod (58),
said crankshaft drive mechanism (6) of said lower tool table (32) is positioned inside said frame (2) of said thermoforming apparatus (1) at a side of said lower tool table (32) facing away from said upper tool table (28), such that the center point of the crank shaft axis, the center point of the eccentric axis portion (62) thereof in the upper reversing point, the linking points of said rotatable guide rails (38), and the linking points at said lower tool table (32) come to lie on an imaginary common straight line when the latter reaches its upper reversing point,
said lower tool table (32) is capable of being lifted by second drive means together with its first drive means within said guide means (42) rectilinearly guiding it in a predetermined stroke for generating a die-cutting movement (124, 126), and
ejector drive means (44) for lifting and lowering ejectors (56) movably arranged in said lower tool (34) are arranged at said lower tool table (32).

2. The thermoforming apparatus (1) in accordance with Claim 1, **characterized in that** said eccentric shaft portion (62) is centrally linked to said lower tool table (32).

3. The thermoforming apparatus (1) in accordance with Claim 1 or 2, **characterized in that** said connecting rod (58) has towards said lower tool table (32) a Y-shaped cross-section so as to branch out into two arms (63) and thus act on said lower tool table (32) via two spaced-apart locations (46).

4. The thermoforming apparatus (1) in accordance with Claim 1 to 3, **characterized in that** said crankshaft drive (6) mechanism includes an electric servomotor (8).

5. The thermoforming apparatus (1) in accordance with Claim 4, **characterized in that** said electric servomotor (8) drives said crankshaft drive mechanism (6) through the intermediary of a toothed belt (10) via pulleys (12, 14).

6. The thermoforming apparatus (1) in accordance with any of Claim 1 to 5, **characterized in that** said lower tool table (32), when in a position removed from said upper tool table (28), is capable of being rotated out (130) of said frame (2) of said thermoforming apparatus (1) together with said rotatable rail assembly (38) and associated with a stacking means (108), so that said lower tool table (32) then faces said opposed stacking means (108), and be approached towards and moved away from the latter.

7. The thermoforming apparatus (1) in accordance with any of Claim 1 to 6, **characterized in that** said ejector drive means (44) are arranged between said two arms (63) of said Y-shaped connecting rod (58) which face said lower tool table (32).

8. The thermoforming apparatus (1) in accordance with any of Claim 1 to 7, **characterized in that** said second drive means for generating the die-cutting stroke include a hydraulically driven lifting cylinder (64).

9. The thermoforming apparatus (1) in accordance with any of Claim 1 to 8, **characterized in that** the stroke of said second drive means is about 3 mm to 10 mm.

10. The thermoforming apparatus (1) in accordance with any of Claim 1 to 8, **characterized in that** the stroke of said second drive means is about 5 mm to 8 mm.

11. The thermoforming apparatus (1) in accordance with any of Claim 1 to 8, **characterized in that** the stroke of said second drive means is about 1.1 to 1.3 times the thickness of a plastic sheet.

12. A method for producing shaped bodies (114), such as cups, containers, lids, secondary packagings for foodstuffs or the like of plastic sheet (50), comprising the following steps:
- providing a thermoforming apparatus (1) according to the preamble of claim 1,
- feeding said plastic sheet (50) into said forming tool (20),
- tightening said plastic sheet (50),
- closing said forming tool (20) by guiding a movable lower tool table (32) through the intermediary of guide means (42) and driving it through the intermediary of first drive means such that it is approached towards said upper tool table (28), wherein,
- said lower tool table (32) is driven through the intermediary of first drive means (118) having the form of a crankshaft drive mechanism (6).
- producing the shaped bodies (114) in the closed condition of said forming tool (20), wherein,
- said lower tool table (32) being lifted and lowered with its drive means within said guide means (42) rectilinearly guiding it, by second drive means, in a predetermined stroke for generating a die-cutting movement (124, 126),
- opening said forming tool (20) by guiding said movable lower tool table (32) through the intermediary of said guide means (42) and driving it through the intermediary of said first drive means such that it is moved away from said upper tool table (28),
- ejecting the shaped bodies (114), optionally into a stacking means (108), wherein,
- said lower tool table (32) being guided rectilinearly (116) through the intermediary of a rotatable guide rail assembly (40) for closing and opening said forming tool (20), and rotated (130) together with said guide rail assembly for ejecting the shaped bodies (114).

13. The method in accordance with Claim 12, **characterized in that** said lower tool table (32), when in a position removed from said upper tool table (28), is rotated (130) with said rotatable rail assembly (40) out of said frame (2) of said thermoforming apparatus (1) and associated to a stacking means (108), so that said lower tool table (32) faces said opposed stacking means (108) then having an opposed position, and can be approached towards and moved away from the latter.

## Revendications

1. Installation de thermoformage (1) servant à fabriquer des corps moulés (114) à partir d'un film plastique (50), tels que des gobelets, des récipients, des couvercles, des emballages alimentaires ou similaires, dotée d'une station de façonnage comprenant un moule de formage (20) en deux parties,
le moule de formage (20) en deux parties comprenant un plateau porte-moule supérieur (28) pouvant être fixé de manière réglable et doté d'un moule supérieur (30) dans lequel des bancs d'étirage (92) sont montés mobiles et un plateau porte-moule (32) inférieur mobile comprenant un moule inférieur (34) doté de cavités (112),
le plateau porte-moule inférieur mobile (32) étant guidé au moyen d'un dispositif de guidage (42) et pouvant être déplacé par un premier dispositif d'entraînement en direction et à distance du plateau porte-moule supérieur (28),
**caractérisée en ce que**
le dispositif de guidage (42) comprend un ensemble pivotant de rails de guidage (40) au moyen duquel le plateau porte-moule (32) peut être guidé en ligne droite et amené à pivoter conjointement avec ledit ensemble,
l'ensemble pivotant de rails de guidage (40) du dispositif de guidage (42) comprenant deux rails de guidage (38) pivotants, articulés sur un cadre (2) de l'installation de thermoformage (1), et entre lesquels le plateau porte-moule inférieur (32) est guidé en ligne droite en direction (116) et à distance du plateau porte-moule supérieur (28),
**en ce que** le premier dispositif d'entraînement pour le plateau porte-moule inférieur (32) est conçu comme un entraînement à manivelle (6),
une partie arbre à excentrique (62) de l'entraînement à manivelle (6) étant articulée sur le plateau porte-moule inférieur (32) au moyen d'une bielle (58),
**en ce que** l'entraînement à manivelle (6) du plateau porte-moule inférieur (32) est disposé du côté du plateau porte-moule inférieur (32) opposé au plateau porte-moule supérieur (28) à l'intérieur du cadre (2) de l'installation de thermoformage (1) de telle sorte que le centre de l'axe du vilebrequin, le centre de la partie arbre à excentrique (62) dans le point de rebroussement supérieur, les points d'articulation des rails de guidage pivotants (38) et les points d'articulation sur le plateau porte-moule inférieur (32), lorsque ce point de rebroussement supérieur est atteint, se situent sur une droite commune imaginaire,
**en ce que** le plateau porte-moule inférieur (32) peut être soulevé conjointement avec son premier dispositif d'entraînement à l'intérieur du dispositif de guidage (42) guidant celui-ci en ligne droite suivant une levée prédéfinie au moyen d'un second dispositif d'entraînement pour créer un mouvement de découpage-poinçonnage (124, 126),
**en ce que** des entraînements d'éjecteurs (44) servant à lever et baisser des éjecteurs (56) montés mobiles dans le moule inférieur (34) sont disposés sur le plateau porte-moule inférieur (32).

2. Installation de thermoformage (1) selon la revendication 1, **caractérisée en ce que** la partie arbre à excentrique (62) de l'entraînement à manivelle (6) est articulée au centre sur le plateau porte-moule inférieur (32).

3. Installation de thermoformage (1) selon la revendication 1 ou 2, **caractérisée en ce que** la bielle (58) comprend en direction du plateau porte-moule inférieur (32) une section transversale en forme de Y, de sorte que ladite bielle se ramifie en deux bras (64) et s'applique donc sur le plateau porte-moule inférieur (32) au-dessus de deux points (46) distants l'un de l'autre.

4. Installation de thermoformage (1) selon l'une quelconque des revendications 1 à 3, **caractérisée en ce que** l'entraînement à manivelle (6) comprend un servomoteur électrique (8).

5. Installation de thermoformage (1) selon la revendication 4, **caractérisée en ce que** le servomoteur électrique (8) entraîne l'entraînement à manivelle (6) au moyen d'une courroie dentée (10) au-dessus de poulies à courroie (12, 14).

6. Installation de thermoformage (1) selon l'une quelconque des revendications 1 à 5, **caractérisée en ce que** le plateau porte-moule inférieur (32) peut pivoter dans une position éloignée du plateau porte-moule supérieur (28) au moyen de l'ensemble pivotant de rails (38) à l'extérieur du cadre (2) de l'installation de thermoformage (1) et peut être associé à un dispositif de gerbage (108), de sorte que la plateau porte-moule inférieur (32) est dirigé vers le dispositif de gerbage (108) lui faisant alors face et peut être dirigé en direction et à distance de celui-ci.

7. Installation de thermoformage (1) selon l'une quelconque des revendications 1 à 6, **caractérisée en ce que** les entraînements d'éjecteurs (44) sont disposés entre les deux bras (64) de la bielle en forme de Y (58) tournés vers le plateau porte-moule inférieur (32).

8. Installation de thermoformage (1) selon l'une quelconque des revendications 1 à 7, **caractérisée en ce que** le second dispositif d'entraînement servant à créer la levée de découpage-poinçonnage comprend un cylindre de levage (64) entraîné de façon hydraulique.

9. Installation de thermoformage (1) selon l'une quelconque des revendications 1 à 8, **caractérisée en ce que** la levée du second dispositif d'entraînement mesure environ de 3 mm à 10 mm.

10. Installation de thermoformage (1) selon l'une quelconque des revendications 1 à 8, **caractérisée en ce que** la levée du second dispositif d'entraînement mesure environ de 5 mm à 8 mm.

11. Installation de thermoformage (1) selon l'une quelconque des revendications 1 à 8, **caractérisée en ce que** la levée du second dispositif d'entraînement mesure environ 1,1 à 1,3 fois l'épaisseur du film plastique.

12. Procédé de fabrication de corps moulés (114) constitués d'un film plastique (50), tels que des gobelets, des récipients, des couvercles, des emballages alimentaires ou similaires, comprenant les étapes suivantes consistant à :
- mettre à disposition une installation de thermoformage (1) selon le préambule de la revendication 1,
- amener le film plastique (50) dans le moule de formage (20),
- tendre le film plastique (50),
- fermer le moule de formage (20) par guidage du plateau porte-moule inférieur (32) au moyen du dispositif de guidage (42) et entraînement dudit plateau au moyen du dispositif d'entraînement, de telle sorte que ledit plateau est déplacé en direction du plateau porte-moule supérieur (28),
- le plateau porte-moule inférieur (32) étant entraîné (118) au moyen d'un dispositif d'entraînement conçu comme un entraînement à manivelle (6),
- fabriquer les corps moulés (114) lorsque le moule de formage (20) est fermé,
- le plateau porte-moule inférieur (32) étant soulevé au moyen de ce dispositif d'entraînement à l'intérieur du dispositif de guidage (42) guidant ledit plateau en ligne droite au moyen d'un second dispositif d'entraînement et à nouveau abaissé pour produire un mouvement de découpage-poinçonnage (124, 126) avec une levée de poinçonnage-découpage prédéfinie,
- ouvrir le corps moulé (20) par guidage du plateau porte-moule inférieur mobile (32) au moyen du dispositif de guidage (42) et entraînement dudit plateau au moyen du dispositif d'entraînement de telle sorte que ledit plateau porte-moule inférieur est déplacé à distance du plateau porte-moule supérieur (28), et
- éjecter des corps moulés (114) éventuellement dans un dispositif de gerbage (108),
- le plateau porte-moule inférieur (32) étant guidé en ligne droite (116) au moyen d'un ensemble pivotant de rails de guidage (40) pour fermer et ouvrir le moule de formage (20) et amené à pivoter (130) conjointement avec ledit ensemble pour éjecter les corps moulés (114).

13. Procédé selon la revendication 12, **caractérisé en ce que** le plateau porte-moule inférieur (32), dans une position distante du plateau porte-moule supérieur (28), est amené à pivoter (130) au moyen de l'ensemble pivotant de rails (40) à l'extérieur du cadre (2) de l'installation de thermoformage (1) et associé à un dispositif de gerbage (108), de sorte que le plateau porte-moule inférieur (32) est dirigé vers le dispositif de gerbage (108) lui faisant alors face et peut être déplacé en direction et à distance dudit dispositif.
